# EUROPÄISCHE PATENTSCHRIFT

(11) **EP 2 625 336 B1**
(45) Veröffentlichungstag und Bekanntmachung des Hinweises auf die Patenterteilung: **03.08.2016**
(21) Anmeldenummer: 11787626.8
(22) Anmeldetag: 29.09.2011
(51) Int. Cl.: B31D 3/00, D21H 19/74, D21H 23/42, D21H 19/40, D21H 27/40

(54) **WABENVERBUNDTRAGTEIL SOWIE VERFAHREN ZU DESSEN BESCHICHTUNG**
HONEYCOMB COMPOSITE SUPPORT PART AND METHOD FOR COATING IT
PARTIE DE SUPPORT COMPOSITE ALVÉOLÉE, ET PROCÉDÉ D'APPLICATION DE REVÊTEMENT ASSOCIÉ

(30) Priorität: 19.04.2011 DE 102011002176; 08.10.2010 US 391088 P
(43) Veröffentlichungstag der Anmeldung: 14.08.2013
(73) Patentinhaber: Iseli, Fredy, 8592 Uttwil (CH)
(72) Erfinder: Iseli, Fredy, 8592 Uttwil (CH)
(74) Vertreter: Wagner, Kilian
(86) Internationale Anmeldenummer: PCT/EP2011/066976
(87) Internationale Veröffentlichungsnummer: WO 2012/045653

(56) Entgegenhaltungen:
- WO-A2-2008/076404
- DE-A1- 3 631 185
- DE-A1- 19 654 672
- DE-U1-202010 003 580

## Beschreibung

Die Erfindung betrifft ein Verfahren zum Beschichten eines eine Vielzahl von sich in eine Axialrichtung erstreckenden Kanälen aufweisendes, aus einem Zellstoff, insbesondere Papier oder Pappe bestehendes, Wabenverbundtragteil (Wabenkörper für konstruktive, vorzugsweise bautechnische Anwendungen, insbesondere Wellpappewabenteil oder expandierter Wabenkörper) mit einer Imprägnierbeschichtung zum Erhöhen der Feuer- und/oder Wasserfestigkeit und/oder der mechanischen Stabilität gemäß dem Oberbegriff des Anspruchs 1 sowie ein beschichtetes Wabenverbundtragteil gemäß Anspruch 10. Ferner betrifft die Erfindung eine Beschichtungsvorrichtung gemäß dem Oberbegriff des Anspruchs 14.

Bekannt sind Wabenverbundtragteile, insbesondere zum Einsatz als Wabenkernmaterial in Verbundwerkstücken, wobei die Waben des Wabenverbundtragteils von einer Vielzahl von sich in einer Axialrichtung erstreckenden Kanälen gebildet werden, welche von Trägerpapieren sowie mit den Trägerpapieren verleimten Wellpapieren umfangsseitig begrenzt sind.

Aus der DE 36 31 185 A1 ist ein Verfahren zum Herstellen von Papierwabenverbund-Formkörpern bekannt, bei dem ein Papierwabenteil, d.h. ein Wabenverbundtragteil mit einer Vielzahl von axialen Kanälen mit einem aushärtbaren flüssigen Kunstharzsystem beschichtet wird. Zum Beschichten wird das Wabenverbundtragteil in ein mit dem Kunstharzsystem gefüllten Tauchbecken eingetaucht, wobei der Raum über dem Tauchbecken evakuiert wird. Die zur Anwendung kommenden Kunstharzsysteme erhöhen zwar möglicherweise die Wasserfestigkeit, jedoch nicht die Feuerfestigkeit der Papierwabe. Darüber hinaus stellt sich eine großtechnische Anwendung des bekannten Verfahrens schwierig dar, da nur batchweise verfahren werden kann. Auch lassen sich die Kanäle des Wabenverbundtragteils mit dem bekannten Verfahren nicht mit beliebig viskosen oder wasserhaltigen Imprägniermitteln (z.B. durch wasserhaltige anorganische Suspension) beschichten, da die Papierwaben das Wasser aufsaugen, dadurch die Festigkeit verlieren und die Wabenstruktur weich wird und sogar in sich zerfällt.

Die DE 20 2010 003 580 U1 zeigt eine mit einem Kunstharzsystem beschichtete Wabenstruktur.

Ein Verfahren zum Herstellen von Wabenverbundtragteilen ist beispielsweise in der DE 103 05 747 A1 beschrieben. Weitere Wabenverbundtragteile (Wellkartontragteile) sind in der DE 196 54 672 A1 sowie der DE 198 20 493 A1 gezeigt.

Um die Kanalinnenwände großtechnisch mit Imprägniermitteln beschichten zu können, wurde vom Anmelder ein Verfahren entwickelt, bei welchem die Wellpappebahn, bestehend aus einem Trägerpapier und einem mit diesem verleimten Wellpapier vor dem Verleimen zu einem Wabenverbundtragteil durch Besprühen mit Imprägniermittel beidseitig beschichtet wird. Das bekannte Verfahren hat sich für eine großtechnische Herstellung bewährt. Nachteilig ist gleichwohl, dass mit dem bekannten Verfahren nicht sämtliche Kanäle in ihrem Inneren axial durchgehend beschichtet werden können, da diejenigen Kanäle der Wellpappebahn, die begrenzt sind von dem Trägerpapier und dem Wellpapier durch Besprühen von außen nicht in ihrem Inneren erreicht werden können.

Ausgehend von dem vorgenannten Stand der Technik liegt der Erfindung die Aufgabe zugrunde, ein verbessertes Beschichtungsverfahren für Wabenverbundtragteile anzugeben, welches sich für eine großtechnische Anwendung eignet, und das darüber hinaus sicherstellt, dass sämtliche Kanäle des Wabenverbundtragteils an ihrem Innenumfang mit einer Imprägnierschicht versehen werden können und dass zudem für die Verarbeitung von wasserhaltigen Imprägniermitteln, insbesondere auf Zementbasis, geeignet ist. Ferner soll ein auf diese Weise beschichtetes Wabenverbundtragteil sowie eine entsprechend verbesserte Beschichtungsvorrichtung angegeben werden.

Diese Aufgabe wird hinsichtlich des Verfahrens mit den Merkmalen des Anspruchs 1 gelöst.

Hinsichtlich des beschichteten Wabenverbundtragteils wird die Aufgabe mit den Merkmalen des Anspruchs 10 und hinsichtlich der Vorrichtung mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, in Abkehr von dem bisherigen Stand der Technik die Imprägnierbeschichtung weder durch Eintauchen des aus einem Zellstoff, wie Papier oder Pappe hergestellten, Wabenverbundtragteils (aus einem Wabenverbund bestehendes oder einen Wabenverbund umfassendes Bauteil) in ein Imprägnierbad noch durch Besprühen einer Wellpappebahn vor dem Verleimen zu einem mehrschichtigen Wabenverbundtragteil aufzubringen, sondern dadurch, dass die Imprägnierbeschichtung in einer Vakuum-Beschichtungskammer aufgebracht wird. In die Vakuum-Beschichtungskammer wird Imprägniermittel, vorzugsweise auch Luft eingespeist und das Imprägniermittel wird an den Innenumfangsflächen, vorzugsweise sämtlicher Kanäle abgeschieden, so dass eine axial in Bezug auf die Längserstreckung der Kanäle durchgehende sowie innenumfänglich geschlossene (vollumfängliche) Beschichtung erhalten wird. Das Vakuum (Unterdruck in Bezug auf den Umgebungsdruck) trägt dazu bei, dass das fluide Imprägniermittel als Strom, vorzugsweise umfassend Luft mit darin befindlichen Imprägniermitteltröpfchen/Imprägniermittelnebel durch die axialen Kanäle strömt und dabei an den Innenumfangsflächen abgeschieden wird.

In der Vakuum-Beschichtungskammer wird also vorzugsweise ein Strom aus fein zerstäubtem Beschichtungsmittel und Luft ausgebildet, der durch die Kanäle strömt, wobei in den Kanälen Imprägniermittel abgelagert wird. Überschüssiges Imprägniermittel wird aus der Vakuum-Beschichtungskammer abgeführt, insbesondere zusammen mit der vorzugsweise eingesaugten, Luft abgezogen bzw. abgesaugt. Durch das erfindungsgemäße Beschichten des Zellstoff-Wabenverbundtragteils in einer Vakuumkammer kann erstmals sichergestellt werden, dass sämtliche Zellstoffoberschichten des Wabenverbundtragteils mit einer geschlossenen Beschichtung versehen werden. Durch die Beschichtung in einer Vakuum-Beschichtungskammer wird auch ein Aufweichen des Zellstoffmaterial verhindert, auch wenn, was bevorzugt ist, Imprägniermittel auf Wasserbasis eingesetzt wird. Bevorzugt handelt es sich um ein Zement-Wasser-Gemisch, d.h. um einen Zementleim, insbesondere umfassend Mikrozement. Zusätzlich oder alternativ können andere, vorzugsweise anorganische Suspensionen eingesetzt werden, die bevorzugt wasserhaltig sind.

Erfindungsgemäß ist vorgesehen, dass im Rahmen des Verfahrens, zwischen dem eine Vielzahl von Waben in Form von Axialkanälen aufweisenden Zellstoff-Wabenverbundtragteil und der Vakuumbeschichtungskammer, in welcher das Wabenverbundtragteil mit der Beschichtung versehen wird, eine Relativbewegung realisiert wird und zwar vorzugsweise senkrecht zur Axialerstreckung der Kanäle.

Dabei ist es besonders bevorzugt, das Wabenverbundtragteil relativ zu einer feststehenden Beschichtungsvorrichtung zu bewegen, insbesondere durch die Vakuum-Beschichtungskammer hindurch. Bei Eintritt in die Vakuum-Beschichtungskammer sowie beim Austritt aus der Vakuum-Beschichtungskammer ist um das Wabenverbundtragteil vorzugsweise ein geringer Spalt gebildet, durch den Luft in die Vakuum-Beschichtungskammer eingesaugt wird, insbesondere zu dem Zweck, für eine Feinstvernebelung von, vorzugsweise über Sprühdüsen eingebrachtes Imprägniermittel, Sorge zu tragen. Es ist auch denkbar, zusätzlich oder alternativ zu einem Einsaugen von Luft, Luft in die Kammer zu Vernebelungszwecken einzublasen. Auch ist es denkbar batchweise zu verfahren, indem nicht das Wabenverbundtragteil durch die Vakuum-Beschichtungskammer hindurch transportiert wird, sondern in dieser bei der Beschichtung aufgenommen ist. Auch in diesem Fall kann bei Bedarf über entsprechende, insbesondere schlitzförmige bzw. spaltförmige Öffnungen Luft eingesaugt werden.

Grundsätzlich ist es auch möglich, das Wabenverbundtragteil als auch die Beschichtungsvorrichtung, vorzugsweise ineinander entgegengesetzte Richtungen, relativ zueinander zu bewegen.

Durch die Realisierung einer Relativbewegung zwischen Wabenverbundtragteil und Beschichtungsvorrichtung lässt sich die großtechnische Anwendbarkeit weiter verbessern, da, während ein Teil der Kanäle mit einem Imprägniermit-telstrom (bevorzugt Luft+Imprägniermittel) durchströmt wird, sich das Wabenverbundtragteil relativ zur Beschichtungsvorrichtung, insbesondere durch die Vakuum-Beschichtungskammer hindurch, bewegt. Hierdurch ist die Länge des Wabenverbundtragteils nicht beschränkend. Die Beschichtung kann quasi kontinuierlich erfolgen, ohne die Notwendigkeit eine sehr große Vakuum-Beschichtungskammer realisieren zu müssen jedes gesamte Wabenverbundtragteil aufnimmt und gleichzeitig sämtliche Kanäle beschichtet (was alternativ möglich ist).

Besonders zweckmäßig ist es, das Imprägniermittel über mindestens eine Düse oberhalb des Wabenverbundtrageteils in die Vakuumkammer einzuspeisen und in einen Bereich unter dem Wabenverbundtrageteil abzusaugen, so dass das Vakuum des Imprägniermittelstroms (vorzugsweise Imprägniermitteltröpfchen in Luft) durch die Kanäle saugt bzw. zieht.

Ganz besonders bevorzugt ist es, wenn das Imprägniermittel in der Vakuum-Beschichtungskammer mit Hilfe von einströmender Luft verwirbelt wird zu dem vorerwähnten fluiden Strom aus fein zerstäubtem Beschichtungsmittel und Luft. Als besonders vorteilhaft hat es sich dabei herausgestellt, wenn das Imprägniermittel über Spalten von der Umgebung, d.h. von außen in die Vakuumkammer eingesaugt wird. Für den Fall eines Durchtransportes des zu beschichteten Wabenverbundtragteils durch die Vakuum-Beschichtungskammer hat es sich als vorteilhaft herausgestellt, wenn die Luft durch das Wabenverbundtragteil beim Ein- und/oder Austritt in die Kammer bzw. aus der Kammer umgebende Spalte eingesaugt wird. Durch das Einsaugen von Luft durch Spalte kann eine hohe Luftströmungsgeschwindigkeit erreicht werden, was einer guten Zerstäubung (Verwirbelung) zuträglich ist. Ein weiterer Vorteil des Einsatzes einer Vakuumkammer besteht darin, dass dem Zellstoff durch den Einsatz von Vakuum Porenluft entzogen wird und sich darüber hinaus das Imprägniermittel intensiv an sämtlichen Flächen des zu beschichtenden Zellstoff-Wabenverbundtragteils anhaftet. Bevorzugt wird der mit überschüssigem Imprägniermittel beladene Luftstrom (zur gleichzeitigen Erzeugung des Vakuums) während der Beschichtung aus der Vakuum-Beschichtungskammer abgesaugt, wobei es besonders bevorzugt ist, wenn das Imprägniermittel, beispielsweise durch das Weiten des Luftstroms gegen ein Prallblech abgeschieden wird und den der Vakuum-Beschichtungskammer, insbesondere über in dieser angeordnete Düsen zugeführt wird.

Das erfindungsgemäße Verfahren eignet sich insbesondere für den Einsatz von wasserhaltigem Imprägniermittel mit anorganischen Zusätzen, ganz besonders bevorzugt Zement, noch weiter bevorzugt Mikrozement. Mit dem Verfahren kann erstmals eine großtechnische Beschichtung sämtlicher Kanäle eines Wabenverbundtragteils sichergestellt werden.

Im Hinblick auf die Ausgestaltung des Wabenverbundtragteils gibt es unterschiedliche Möglichkeiten. Wesentlich ist, dass es sich um einen Wabenkörper aus Zellstoff, insbesondere Papier oder Pappe handelt. Dieser kann in an sich bekannter Weise auf unterschiedliche Arten hergesellt werden, beispielsweise durch das Miteinander-Verleimen mehrer Wellpappelagen, alternativ ist das Wabenverbundtragteil aus einem sogenannten expandierten Wabenkörper, d.h. einem auseinanderziehbaren Wabenelement hergestellt, wobei sich grundsätzliche Kraftlinerpapiere, Testlinerpapiere oder Schrenzpapiere eignen.

Zum Erzeugen des Unterdrucks ist zweckmäßiger Weise der Vakuumkammer eine Saugpumpe oder ein Sauggebläse zugeordnet, um die entsprechende Druckdifferenz in Bezug auf die Umgebung zu erzeugen. Besonders zweckmäßig ist es dabei, wenn, wie eingangs erwähnt, über diese Saugmittel zusammen mit in die Vakuumkammer zugeführter, insbesondere eingesaugter Luft das überschüssige, d.h. nicht abgeschiedene Imprägniermittel abgesaugt wird. Durch die Erfindung ist es auch möglich, ein aus einem auseinanderziehbaren Wabenelement (expandierte Wabe) hergestelltes Wabenverbundtragteil, insbesondere aus Kraftlinerpapier, Testlinerpapier oder Schrenzpapier, optimal zu beschichten, welches nicht durch miteinander Verleimen einer Vielzahl von Wellpappebahnen hergestellt ist.
Bevorzugt wird das überschüssige, d.h. abgeführte, insbesondere abgesaugte Imprägniermittel im Kreislauf gefördert, d.h. zum Beschichten den Kanälen wieder zugeführt, wobei es besonders zweckmäßig ist, wenn das abführseitige Im-prägniermittel gesammelt bzw. einem Sammelbehältnis zugeführt wird, aus welchem dann Imprägniermittel mittels einer Förderpumpe zum Zuführen zu den Kanälen wieder abgezogen wird.

Wie eingangs angedeutet ist das Imprägniermittel, mit Wasser gemischten Zement, insbesondere ein Zementgemisch, bevorzugt ein Gemisch aus Mikrozementen umfasst und/oder Wasserglas und/oder anorganische Suspensionen, vorzugsweise ein Gemisch aus Wasser mit einem anorganischen Bindemittel, wie z.B. Zement oder Kalk. Besonders bevorzugt ist eine Variante des Verfahrens, bei welcher die Kanäle gleichzeitig mit dem Beschichten in der Vakuum-Beschichtungskammer und/oder nach dem Imprägniermittelbeschichten mit einem Füllmaterial, insbesondere einem Wärmedämmmaterial gefüllt werden, welches in die Kanäle eingepresst, und/oder eingeblasen und/oder eingesaugt werden kann. Bevorzugt liegt dieses Füllmaterial in Form von Partikeln, vorzugsweise mit einer Körnung von weniger als 2mm, vorzugsweise zwischen 0,05mm und 2mm, vor. Ganz besonders zweckmäßig ist es, wenn dieses Füllmaterial mit dem Imprägniermittel gemischt ist, so dass die Mischung in Form des Imprägniermittelstroms durch die Kanäle zum Zwecke der Beschichtung förderbar ist. Bei dem Wärmedämmmaterial kann es sich um Schaumglas, beispielsweise Misapor handeln und/oder um Isolationsperlen, beispielsweise aus Styropor und/oder Polystyrol und/oder Kieselsäure, wobei es besonders zweckmäßig ist hierzu Alt- oder Abfallmaterialien zu verwenden, die ggf. auf die bevorzugte Körnung (Größe) gemahlen werden können. Auch ist es möglich (zusätzlich oder alternativ) als Wärmedämmmaterialien, insbesondere leichtes Baumaterial, wie Bläton oder Ytong einzusetzen. Durch die vorgenannte Wärmedämmfüllung werden erheblich bessere Isolationswerte erreicht und die von den Kanälen gebildete Wabenstruktur wird zusätzlich verfestigt.

Gemäß einer Verfahrensvariante kann auch auf ein Absaugen des Füllmaterials und/oder einer Mischung aus Imprägniermittel und Füllmaterial verzichtet werden und es kann statt dessen beispielsweise das Füllmaterial oder die Im-prägniermittelbeschichtungs-Füllmaterialmischung auf der Abführseite der Vakuum-Beschichtungskammer mechanisch abgestreift werden, um sicherzustellen, dass die Kanäle gefüllt bleiben. Bei einer nachträglichen Auffüllung der Kanäle mit Füllmaterial, d.h. bei einem Einbringen des Füllmaterials nach dem Imprägniermittelbeschichten, insbesondere nach dem Trocknen der Imprägniermittelbeschichtung ist es vorteilhaft, wenn das Wabenverbundtragteil auf einer Seite, insbesondere auf einer Abführseite verschlossen wird. Hierzu kann das Wabenverbundtragteil mit einem Papier, einem Karton und/oder einer Platte kaschiert werden.

Besonders zweckmäßig ist es, die Masse bestehend aus Imprägniermittel und Wärmedämmmaterial insbesondere auf der oben angeordnete, Zuführseite zuzuführen und ggf. unter Druck, beispielsweise mittels einer Pumpe und/oder mechanisch z.B. mittels eines Rakels in die Kanäle einzubringen, insbesondere einzupressen und die überschüssige Masse auf der Abführseite, insbesondere unter zu Hilfenahme von Unterdruck, abzuführen, insbesondere abzuziehen bzw. abzusaugen.

An dieser Stelle sei ausdrücklich erwähnt, dass das Vorsehen von Füllmaterial, insbesondere Wärmedämmmaterial in den Kanälen des Wabenverbundtragteils als eigenständige Erfindung offenbart gelten und beispielsweise im Wege einer Teilanmeldung beanspruchbar sein soll. Bevorzugt ist es zwar das Wärmedämmmaterial zusätzlich zu einer vollumfänglichen und axial durchgehenden Imprägnierbeschichtung vorzusehen, insbesondere indem das Wärmedämmmaterial zusammen mit dem Imprägniermittel die Kanäle durchströmt. Es ist jedoch auch denkbar, das Wärmedämmmaterial ohne Imprägnierbeschichtung vorzusehen oder auf andere Weise, insbesondere für sich genommen in die Kanäle einzuführen.

Besonders zweckmäßig ist es, wenn das erfindungsgemäß beschichtete Wabenverbundtragteil, insbesondere zum Herstellen eines zwei über das Wabenverbundtragteil beabstandete Deckschichten aufweisenden Sandwichbauteils mit mindestens einer Deckschicht versehen wird, wobei die Deckschicht beispielsweise aus Holz, Pappe oder geschäumtem Kunststoff oder Sperrholz oder Aluminium-Folie, oder Papier, oder Blech bestehen kann. Dabei ist die Flächenerstreckung der Deckschicht senkrecht zur Längserstreckung der Kanäle ausgerichtet.

Ganz besonders bevorzugt ist es, wenn das Wabenverbundtragteil auf zwei voneinander abgewandten Seiten mit unterschiedlichen Deckschichten versehen wird, die sich beispielsweise in ihrer Dickenerstreckung (Stärke) unterscheiden und/oder hinsichtlich der gewählten Materialien. Alternativ können identische Deckschichten eingesetzt werden. Als Deckschichten kommen beispielsweise Riffelbleche, Stahlbleche, Edelstahlbleche, Kupferbleche, Zinkbleche oder Aluminiumbleche zum Einsatz, gegebenenfalls auch in unterschiedlichsten Legierungen. Auch ist es denkbar, Kunststoffplatten einzusetzen

Die Erfindung führt auch auf ein Wabenverbundtragteil, welches vorzugsweise nach einem nach dem Konzept der Erfindung ausgeführten Verfahren beschichtet ist, wobei erfindungsgemäß vorgesehen ist, dass sämtliche Kanäle des Wabenverbundtragteils an ihrem Innenumfang mit einer vollumfänglichen und axial durchgehenden zementhaltigen Imprägnierbeschichtung versehen sind. Besonders zweckmäßig ist es, wenn die Kanäle zusätzlich mit Füllmaterial, insbesondere Wärmedämmmaterial, versehen, insbesondere axial durchgehend aufgefüllt sind.

Das Wabenverbundtragteil kann bevorzugt aus mehreren miteinander verleimten Wellpappebahnschichten bestehen, wobei die mehreren Schichten auch aus einer einzigen Bahn bestehen bzw. aus dieser hergestellt sein können, insbesondere dann, wenn das Wabenverbundtragteil durch Aufwickeln einer Wellpappebahn unter gleichzeitigem Verleimen derselben mit sich selbst hergestellt wird. Wesentlich ist, dass senkrecht zur Längserstreckung der Kanäle mehrere Wellpappeschichten realisiert sind. Anstelle des Aufwickelns von Wellpappebahnen ist es möglich mehrere Wellpappebahnen parallel zu schichten und miteinander zu verleimen. Das Aufwickelverfahren ist beispielsweise in der DE 103 05 747 A1 beschrieben. Alternativ kann das Wabenverbundtragteil aus einem ausziehbaren Wabenelement bestehen, d.h. als expandiertes Wabenelement ausgebildet sein.

Die Wellpappebahnen, d.h. die Schichten des aus Wellpappebahnen hergestellten Wabenverbundtragteils umfassen erste und zweite Kanäle, wobei die ersten Kanäle ausgebildet sind zwischen einem Trägerpapier der Schicht und einem Wellenpapier dieser Schicht. Die zweiten Kanäle sind ausgebildet zwischen dem Wellenpapier der Schicht und entweder einem Trägerpapier der angrenzenden Schicht oder einem weiteren Trägerpapier derselben Schicht, je nach dem welche Art von Wellpappebahn eingesetzt wird, also entweder eine Wellpappebahn umfassend ein einziges Trägerpapier das mit einem einzigen Wellenpapier verleimt ist oder eine Wellpappebahn bei der das Wellenpapier sandwichartig zwischen zwei Trägerpapieren aufgenommen ist.

Bevorzugt befindet sich an keiner Verbindungsstelle, an welcher das Wellenpapier mit Trägerpapieren verleimt ist zwischen dem Wellenpapier und dem Trägerpapier Imprägniermittel, wie dies der Fall ist, wenn die Wellpappebahn wie im Stand der Technik vor dem Verleimen zum Wabenverbundtragteil von außen besprüht wird. Bei dem erfindungsgemäßen Verfahren werden die fertigen Kanäle, also bei einem bereits verleimten Wabenverbundtragteil durchströmt, so dass in den Verbindungsbereichen zwischen dem Wellenpapier und den Trägerpapieren ausschließlich Leim vorhanden sein sollte.

Wie erwähnt, kann an Stelle des miteinander Verleimens von Wellpappebahnen umfassend jeweils ein Wellenpapier und mindestens ein Trägerpapier das Wabenverbundtragteil auch als so genannte expandierte Wabe ausgebildet sein bzw. werden. Expandierte Waben sind deutlich kostengünstiger herstellbar als die aus mehreren Wellkartonbahnen erzeugten Wabenkörper.

Wie bereits angedeutet ist es besonders zweckmäßig, wenn in den beschichteten Kanälen ein Füllmaterial, insbesondere ein Wärmedämmmaterial oder Schalldämmmaterial vorgesehen ist, wobei dieses Wärmedämmmaterial oder Schalldämmmaterial vorzugsweise zumindest näherungsweise über die gesamte Längserstreckung der Kanäle vorgesehen sein sollte, und wobei selbstverständlich einzelne benachbarte Partikel des Füllmaterials in Richtung der Längserstreckung der Kanäle voneinander beabstandet sein können. Vorzugsweise wird das Füllmaterial in die Kanäle zusammen mit dem Imprägniermittel in Form des das Füllmaterial enthaltenden Imprägniermittelstroms in der Vakuumbeschichtungskammer eingebracht.

Besonders zweckmäßig ist es, wenn das Wabenverbundtragteil, insbesondere ein mit diesem hergestelltes Verbundmaterial, mindestens eine Gas- und/oder Wasserdampf hemmende oder undurchlässige Kunststoff- oder Metallfolie umfasst, wobei es noch weiter bevorzugt ist, wenn das Wabenverbundtragteil mittels einer solchen Folie umhüllt ist. Bevorzugt soll zumindest eine Axialseite der Kanäle, noch weiter bevorzugt beide Axialseiten der Kanäle mit mindestens einer Kunststofffolie und/oder einer Metallfolie verschlossen sein.

Die Erfindung führt auch auf eine Beschichtungsvorrichtung bzw. deren Verwendung zum Beschichten von Zellstoff-Wabenverbundtragteilen. Die erfindungsgemäße Beschichtungsvorrichtung zeichnet sich durch eine Vakuumbeschichtungskammer aus, in die Imprägniermittel, vorzugsweise jedoch nicht zwingend auch Luft zugeführt wird. Erfindungsgemäß sind Mittel zur Erzeugung einer Relativbewegung zwischen den Wabenverbundtragteilen und der Vakuumbeschichtungskammer vorgesehen. Zum Erzeugen des Vakuums (Unterdruck in Bezug auf die Umgebung) in der Vakuumbeschichtungskammer sind dieser entsprechende Vakuumerzeugungsmittel, insbesondere eine Saugpumpe oder ein Sauggebläse zugeordnet, wobei über diese bevorzugt auch Luft in die Vakuumbeschichtungskammer eingesaugt wird, insbesondere über entsprechende Schlitze bzw. Spalte. Die Luft wird dabei bevorzugt mit einer so hohen Geschwindigkeit eingesaugt oder eingeblasen, dass eine optimale Verwirbelung/Vernebelung des Imprägniermittels stattfindet und der Fluidstrom aus Luft und tröpfchenförmigem Imprägniermittel durch die Kanäle strömt, wobei hierbei Imprägniermittel als Beschichtung vollumfänglich und axial durchgehend abgelagert wird. Bevorzugt wird das Wabenverbundtragteil mittels geeigneter Mittel, beispielsweise eines Förderbandes, einer Förderkette oder durch Vorschub- und/oder Ziehmittel durch die Vakuumbeschichtungskammer hindurchgeführt. Dabei ist es besonders zweckmäßig, wenn die Vakuumbeschichtungskammer eine Eingangsöffnung und eine Ausgangsöffnung zum Einführen bzw. Heraustransportieren des Wabenverbundtragteils aufweist, wobei zwischen dem Rand der Eingangsöffnung und dem Zellstoff-Wabenverbundtragteil und dem Rand der Ausgangsöffnung und dem Wabenverbundtragteil ein vorzugsweise umlaufender Spalt gebildet wird, durch den Luft mittels der Vakuumerzeugungsmittel eingesaugt wird. Bevorzugt sind der Vakuumbeschichtungskammer Abscheidemittel nachgeordnet, um aus dem Imprägniermitteltröpfchen enthaltenden, abgesaugten Luftstrom das Imprägniermittel abzuscheiden, insbesondere indem dieses gegen ein Prallblech geleitet wird bzw. in dem die Strömungsgeschwindigkeit durch eine entsprechende Expansion (Querschnittsvergrößerung) reduziert wird. Das abgeschiedene Imprägniermittel kann dann mittels einer geeigneten Förderpumpe der Vakuumbeschichtungskammer, insbesondere über mindestens eine Düse wieder zugeführt werden.

Weiter Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: einen Ausschnitt aus einem mehrschichtigen Wabenverbundtrag teil, bestehend aus mehreren miteinander verleimten Wellpappelagen, die von einer einzigen oder mehreren Wellpappebahnen gebildet sein können,
- Fig. 2a: eine Frontansicht einer Beschichtungsvorrichtung, genauer einer Vakuumbeschichtungskammer einer Beschichtungseinrichtung,
- Fig. 2b: eine Schnittansicht durch die Beschichtungskammer gemäß Fig. 2 entlang der Schnittlinie A - A und
- Fig. 3: eine Draufsicht auf ein Wellpappeteil, bei welchem exemplarisch einige Kanäle (bevorzugt jedoch sämtliche Kanäle) mit Füllmaterial (hier Wärmedämmmaterial) in Form von Styroporkugeln gefüllt ist.

In den Figuren sind gleiche Elemente und Elemente mit der gleichen Funktion mit den gleichen Bezugszeichen gekennzeichnet.

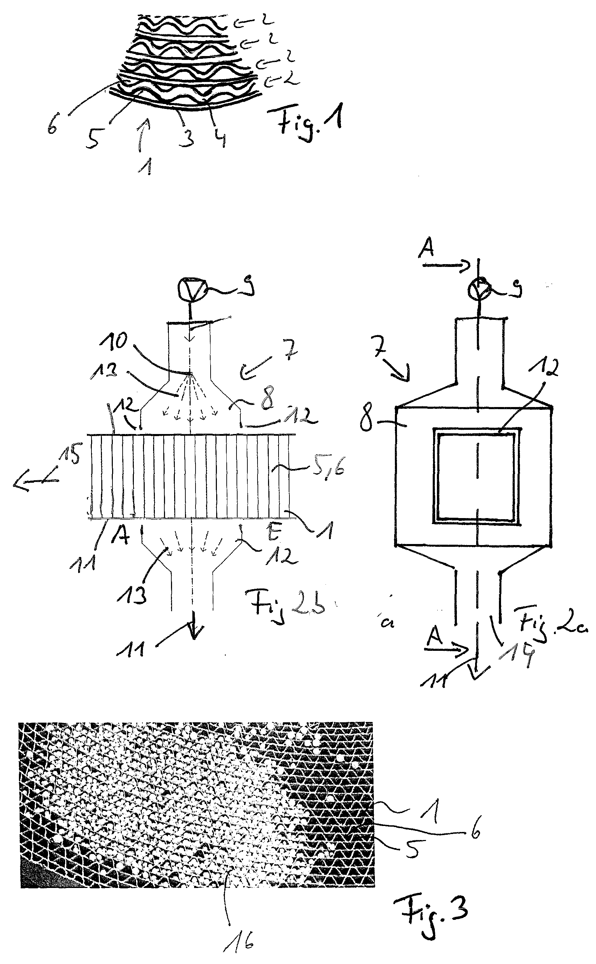

In Fig. 1 ist eine Draufsicht auf eine Flächenseite eines Wabenverbundtragteils 1 (hier beispielhaft ein Wellpappewabenkörper) gezeigt. Der gezeigte Ausschnitt besteht aus vier miteinander verleimten Lagen 2 (Schichten), wobei jede Lage 2 gebildet ist von einem flächigen Trägerpapier 3, dass mit einem Wellpapier 4 unter Ausbildung von ersten Kanälen 5 verleimt ist. Die ersten Kanäle 5 sind also umfänglich begrenzt von dem Wellenpapier 4 und dem Trägerpapier 3. Ferner umfasst jede Lage 2 zweite Kanäle 6 die begrenzt sind in dem gezeigten Ausführungsbeispiel von dem vorgenannten Wellenpapier 4 und einem weiteren Trägerpapier, nämlich dem Trägerpapier der der angrenzenden (parallelen) Lage. Bei einer alternativen, nicht dargestellten Ausführungsvariante kann jede Lage 2 auch zwei Trägerpapiere umfassen, die das Wellpapier sandwichartig zwischen sich aufnehmen. In diesem Fall sind die zweiten Kanäle von dem Wellpapier und einem Trägerpapier derselben Lage begrenzt.

Wie aus Fig. 1 zu entnehmen ist, sind die Lagen 2 gekrümmt. Dies rührt daher, dass das Wabenverbundtragteil 2 durch Aufwickeln einer Wellpappebahn hergestellt wurde, beispielsweise wie in der DE 10 305 747 A1 beschrieben, d.h. die einzelnen Lagen 2 bestehen aus derselben Wellpappebahn. Bei einem alternativen Herstellungsverfahren werden die Lagen 2 von separaten Wellpappebahnstücken gebildet, die auf einandergelegt und miteinander verleimt werden. Wesentlich ist lediglich, dass eine Vielzahl von axialen Kanälen 5, 6 gebildet sind, die, beispielsweise gemäß dem anhand Fig. 2 beschriebenen Verfahren mit einer Imprägnierbeschichtung versehen werden.

In den Fig. 2a und 2b ist stark schematisiert eine Beschichtungsvorrichtung 7 gezeigt. Diese umfasst eine Beschichtungskammer 8, durch die hindurch ein zu beschichtendes Wabenverbundtragteil 1 aus Zellstoff förderbar ist, und zwar in eine Pfeilrichtung 15. In die Vakuumbeschichtungskammer 8 wird mit Hilfe von eine Förderpumpe umfassenden Zuführmitteln 9 Imprägniermittel 13, hier mit den Hauptbestandteilen Wasser und Zement durch eine Düsenanordnung 10 zugeführt. Das Imprägniermittel 13 strömt durch mindestens eine Düse der Düsenanordnung 10 aus und wird vorzugsweise dabei versprüht. Bevorzugt wird das, vorzugsweise versprühte, Imprägniermittel 13 in der Vakuumbeschichtungskammer 8 (weiter) verwirbelt. Hierzu wird über lediglich über einen Pfeil angedeutete Saugmittel 11 ein Vakuum (Unterdruck) in der Vakuumbeschichtungskammer 8 erzeugt, welches dafür sorgt, dass durch das Wabenverbundtragteil 1 umgebende Spalte 12 Luft von außen mit hoher Geschwindigkeit angesaugt wird. Diese Luft trifft auf das durch die Düsen austretende, vorzugsweise ausgesprühte Imprägniermittel, so dass dieses feinst verstäubt wird und sich ein fluider Strom aus einem Luftimprägniermittel-Tröpfengemisch bildet, der durch die Kanäle 5, 6 strömt (vorzugsweise gesaugt wird) und zwar in Richtung einer Auslassseite 14 der Vakuumbeschichtungskammer 8. Bei Bedarf kann ein an einer Eingangsseite E vorgesehener Spalt 12 und/oder ein an einer Ausgangsseite A für das Wabenverbundtragteil 1 vorgesehener Spalt in seiner Querschnittsfläche veränderlich ausgestaltet werden, um hierdurch die Strömungsgeschwindigkeit beeinflussen zu können bzw. die Beschichtungsvorrichtung 7 für unterschiedliche Geometrien von Wabenverbundtragteilen 1 einfach anpassen zu können.

Wesentlich ist jedenfalls, dass das, vorzugsweise vernebelte bzw. in einem Lufttropfengemisch vorliegende Imprägniermittel innerhalb der Vakuumbeschichtungskammer 8 in sämtliche Kanäle 5, 6 gelangt und dort Imprägniermittel abgeschieden wird, wobei überschüssiges Imprägniermittel 13 zusammen mit der durch die Spalte 12 eingesaugten Luft über die Saugmittel 11 abgezogen wird und vorzugsweise von der Luft getrennt wird, wobei das Imprägniermittel dann wiederum bevorzugt über die Zuführmittel 9 der Vakuumbeschichtungskammer 8 zugeführt wird.

Bei Bedarf kann bereits in einen Imprägniermittelstrom innerhalb der Vakuumbeschichtungskammer 8 Füllmaterial zugegeben, insbesondere eingeblasen werden. Ganz besonders bevorzugt handelt es sich um Wärmedämmmaterial und/oder Schalldämmmaterial in Form von Partikeln, insbesondere Kugeln, welche sich in den Kanälen 5, 6, vorzugsweise über die gesamte Längserstreckung der Kanäle 5, 6 abscheiden.

Fig. 3 zeigt exemplarisch eine Wabenverbundtragteil 1 mit einer Vielzahl von ersten und zweiten Kanälen 5, 6, wobei lediglich exemplarisch ein Teil der Kanäle 5, 6 gefüllt ist mit Füllmaterial 16, hier in Form von Styroporkugeln, wobei es selbstverständlich bevorzugt ist, wenn sämtliche Kanäle 5, 6 mit Füllmaterial, insbesondere Dämmmaterial gefüllt sind.

### Bezugszeichenliste

- 1: Wabenverbundtragteil
- 2: Lagen
- 3: Trägerpapier
- 4: Wellpapier
- 5: erste Kanäle
- 6: zweite Kanäle
- 7: Beschichtungsvorrichtung
- 8: Vakuumbeschichtungskammer
- 9: Zuführmittel
- 10: Düsenanordnung
- 11: Saugmittel
- 12: Spalt/e
- 13: Imprägniermittel
- 14: Auslassseite für Luft und überschüssiges Imprägniermittel
- 15: Pfeilrichtung (Transportrichtung)
- 16: Füllmaterial

- A: Ausgangsseite
- E: Eingangsseite

## Patentansprüche

1. Verfahren zum Beschichten eines eine Vielzahl von sich in eine Axialrichtung erstreckenden Kanälen aufweisenden Zellstoff-Wabenverbundtragteils (1) mit einer Imprägnierbeschichtung zum Erhöhen der Feuer- und/oder Wasserfestigkeit und/oder mechanischen Stabilität, wobei in eine Vakuumbeschichtungskammer (8) Imprägniermittel zugeführt und in den Kanälen an deren Innenumfangsflächen eine vollumfängliche und axial durchgehende Beschichtung durch Abscheiden von Imprägniermittel an den Innenumfangsflächen der Kanäle erzeugt und überschüssiges Imprägniermittel (13) aus der Vakuum-Beschichtungskammer (8) abgezogen wird,
**dadurch gekennzeichnet,**
**dass** das Wabenverbundtragteil (1) und die Vakuumbeschichtungskammer relativ zueinander bewegt werden.

2. Verfahren nach Anspruch 1,
**dadurch gekennzeichnet,**
**dass** in die Vakuumbeschichtungskammer Luft zugeführt, insbesondere eingesaugt und/oder eingeblasen wird.

3. Verfahren nach einem der Ansprüche 1 oder 2,
**dadurch gekennzeichnet,**
**dass** in der Vakuumbeschichtungskammer (8) ein Imprägniermittelstrom, insbesondere in Form eines Luft-/Imprägniermittelgemisches, durch die Kanäle (5, 6) erzeugt wird.

4. Verfahren nach einem der Ansprüche 2 oder 3,
**dadurch gekennzeichnet,**
**dass** das, bevorzugt über mindestens eine Düse, in die Vakuumbeschichtungskammer (8) zugeführte, insbesondere eingesprühte, Imprägniermittel (13) mittels der in die Vakuumbeschichtungskammer (8) einge saugten und/oder eingeblasenen Luft verwirbelt, insbesondere turbulent vernebelt, wird und das verwirbelte Imprägniermittel (13) in den Kanälen (5, 6) abgeschieden wird.

5. Verfahren nach einem der Ansprüche 2 bis 4,
**dadurch gekennzeichnet,**
**dass** das überschüssige Imprägniermittel (13) zusammen mit der angesaugten Luft abgesaugt wird.

6. Verfahren nach einem der Ansprüche 2 bis 5,
**dadurch gekennzeichnet,**
**dass** die Luft über mindestens einen Spalt (12) zwischen Wabenverbundtragteil (1) und Vakuumbeschichtungskammer (8) in die Vakuumbeschichtungskammer (8) eingesaugt wird.

7. Verfahren nach einem der vorhergehenden Ansprüche,
**dadurch gekennzeichnet,**
**dass** das Wabenverbundtragteil (1) und die Vakuumbeschichtungskammer (8), senkrecht zur Axialerstreckung der Kanäle (5, 6), relativ zueinander bewegt werden.

8. Verfahren nach einem der vorhergehenden Ansprüche,
**dadurch gekennzeichnet,**
**dass** das Imprägniermittel (13) aus mindestens einer Substanz aus der folgen den Gruppe von Substanzen besteht oder zumindest eine dieser Substanzen, vorzugsweise zusammen mit einem Fluid, insbesondere Wasser, umfasst: Zement, insbesondere, Mikrozement, Wasserglas, Kalk, anorganisches Bindemittel.

9. Verfahren nach einem der vorhergehenden Ansprüche,
**dadurch gekennzeichnet,**
**dass** auf zumindest einer Flächenseite des Wabenverbundtragteils (1), insbesondere zum Herstellen eines Sandwichbauteils, eine Deckschicht, insbesondere aus Holz, Pappe, geschäumten Kunststoff oder Sperrholz festgelegt wird.

10. Wabenverbundtragteil (1), beschichtet nach einem Verfahren nach einem der vorhergehenden Ansprüche, bei dem vorzugsweise sämtliche Kanäle (5, 6) an ihrem Innenumfang mit einer vollumfänglich und axial durchgehenden mit Wasser gemischten Zement-Imprägnierbeschichtung beschichtet sind.

11. Wabenverbundtragteil nach Anspruch 10,
**dadurch gekennzeichnet,**
**dass** das Wabenverbundtragteil (1) mindestens ein Trägerpapier (3) und mindestens ein mit dem Trägerpapier (3) verleimtes Wellpapier (4), welches mit seiner dem Trägerpapier (3) zugewandten gewellten ersten Flächenseite jeweils eine erste Innenumfangsfläche aufweisende erste Kanäle (5) und mit seiner von der ersten Flächenseite abgewandten gewellten zweiten Flächenseite jeweils eine zweite Innenumfangsfläche auf weisende zweite Kanäle (6) begrenzt, wobei die ersten Innenumfangsflächen der ersten Kanäle (5) sowie zweiten Innenumfangsflächen der zweiten Kanäle (6) mit der Imprägnierbeschichtung zum Erhöhen der Feuer- und/oder Wasserfestigkeit beschichtet sind.

12. Wabenverbundtragteil nach Anspruch 11,
**dadurch gekennzeichnet,**
**dass** zwischen der ersten Flächenseite des Wellenpapiers (4) und dem Trägerpapier (3) eine Leimschicht vorgesehen ist, wobei diese Leimschicht im Verbindungsbereich zwischen dem Wellpapier (4) und dem Trägerpapier (3) unmittelbar an das Wellpapier (4) und unmittelbar an die erste Flächenseite des Trägerpapiers (3) angrenzt, und dass zwischen der zweiten Flächenseite des Wellpapiers (4) und einem, insbesondere dem, Trägerpapier (3) eine Leimschicht vorgesehen ist, wobei diese Leimschicht im Verbindungsbereich zwischen dem Wellpapier (4) und dem Trägerpapier (3) unmittelbar an das Wellpapier (4) und unmittelbar an die zweite Flächenseite des Trägerpapiers (3) angrenzt.

13. Wabenverbundtragteil nach Anspruch 10,
**dadurch gekennzeichnet,**
**dass** das Wabenverbundtragteil (1) als expandierte Wabenkörper ausgebildet ist.

14. Beschichtungsvorrichtung (7) ausgebildet zur Durchführung eines Verfahrens nach einem der Ansprüche 1 bis 9 zum Beschichten eines eine Vielzahl von sich in eine Axialrichtung erstreckenden Kanälen aufweisendes Wabenverbundtragteils (1) mit einer Imprägnierbeschichtung zum Erhöhen der Feuer- und/oder Wasserfestigkeit und/oder der mechanischen Stabilität, wobei die Vorrichtung (7) eine Vakuumbeschichtungskammer (8) umfasst, der Mittel zum Erzeugen eines Vakuums zugeordnet sind sowie, vorzugsweise mindestens eine Düse aufweisende, Zuführmittel zum Zuführen von Imprägniermittel (13) in die Vakuumbeschichtungskammer (8) zum Abscheiden von Imprägniermittel (13) an den Innenumfangsflächen der Kanäle (5, 6) zum Erzeugen einer vollumfänglichen und axial durchgehenden Beschichtung,
**dadurch gekennzeichnet,**
**dass** Mittel zum relativen zueinander Bewegen des Wabenverbundtragteil (1) und der Vakuumbeschichtungskammer (8) vorgesehen sind.

15. Vorrichtung nach Anspruch 14,
**dadurch gekennzeichnet,**
**dass** die Vakuumbeschichtungskammer (8) mindestens eine, vorzugsweise schlitz- oder spaltförmige Öffnung, zum Einsaugen von Luft auf weist und/oder dass der Vakuumbeschichtungskammer (8) Einblasmittel zum Einblasen von Luft zugeordnet sind.

## Claims

1. Method for coating a pulp honeycomb composite support part (1) having a plurality of channels which extend in an axial direction with an impregnating coating for increasing the refractoriness and/or the watertightness and/or the mechanical stability, wherein an impregnating agent is fed into a vacuum coating chamber (8) and a complete and axially continuous coating is generated in the channels on their inner circumferential areas through deposition of the impregnating agent on the inner circumferential areas of the channels, and the excess impregnating agent (13) is removed from the vacuum coating chamber (8),
**characterised in**
**that** the honeycomb composite support part (1) and the vacuum coating chamber move relative to each other.

2. Method according to Claim 1, **characterised in that** air is fed into the vacuum coating chamber, particularly absorbed and/or blown in.

3. Method according to one of Claims 1 or 2, **characterised in that** a flow of impregnating agent, particularly in the form of an air/impregnating agent mixture is generated in the vacuum coating chamber (8) through the channels (5, 6).

4. Method according to one of Claims 2 or 3,
**characterised in**
**that** the impregnating agent (13) fed, particularly injected, into the vacuum coating chamber (8), preferably via at least one nozzle, is whirled, particularly turbulently atomised, by the air absorbed/blown into the vacuum coating chamber (8), and the whirled impregnating agent (13) is deposited in the channels (5, 6).

5. Method according to one of Claims 2 to 4,
**characterised in**
**that** the excess impregnating agent (13) is extracted in conjunction with the aspirated air.

6. Method according to one of Claims 2 to 5,
**characterised in**
**that** the air is absorbed into the vacuum coating chamber (8) via at least one gap (12) between the honeycomb composite support part (1) and the vacuum coating chamber (8).

7. Method according to one of the preceding claims,
**characterised in**
**that** the honeycomb composite support part (1) and the vacuum coating chamber (8) are moved relative to each other perpendicular to the axial extension of the channels (5, 6).

8. Method according to one of the preceding claims,
**characterised in**
**that** the impregnating agent (13) consists of at least a substance from the following group of substances or comprises at least one of these substances, preferably in conjunction with a fluid, particularly water: cement, particularly, micro-cement, water glass, lime, inorganic binders.

9. Process according to one of the preceding claims,
**characterised in**
**that** a top layer, particularly of wood, cardboard, foamed plastic or plywood is fixed at least on a surface side of the honeycomb composite support part (1), particularly in order to produce a sandwich construction element.

10. Honeycomb composite support part (1) coated according to a method according to one of the preceding claims, wherein preferably all channels (5, 6) are coated with a complete and axially continuous cement impregnating coating mixed with water on their inner circumference.

11. Honeycomb composite support part according to Claim 10,
**characterised in**
**that** the honeycomb support part (1) comprises at least a carrier paper (3) and, glued to the carrier paper (3), at least a corrugated paper (4) which delimits, with its first corrugated surface side directed to the carrier paper (3), respectively a first inner circumferential surface having first channels (5) and, with its second corrugated surface side turned away from the first surface side, respectively a second inner circumferential surface having second channels (6), wherein the first inner circumferential surfaces of the first channels (5) and the second inner circumferential surfaces of the second channels (6) are coated with the impregnating coating for increasing the refractoriness and/or the watertightness.

12. Honeycomb composite support part according to Claim 11,
**characterised in**
**that** a glue layer is provided between the first surface side of the corrugated paper (4) and the carrier paper (3), wherein this glue layer directly borders the corrugated paper (4) and directly borders the first surface side of the carrier paper (3) in the connection area between the corrugated paper (4) and the carrier paper (3), and in that a glue layer is provided between the second surface side of the corrugated paper (4) and a, particularly the, carrier paper (3), wherein this glue layer immediately borders the corrugated paper (4) and immediately borders the second surface side of the carrier paper (3) in the connection area between the corrugated paper (4) and the carrier paper (3).

13. Honeycomb composite support part according to Claim 10,
**characterised in**
**that** the honeycomb composite support part (1) is configured as an expanded honeycomb body.

14. Coating device (7) configured for performing a method according to one of Claims 1 to 9 for coating a honeycomb composite support part (1) having a plurality of channels extending in axial direction with an impregnating coating for increasing the refractoriness and/or the watertightness and/or the mechanical stability, wherein the device (7) comprises a vacuum coating chamber (8), to which means are associated for generating a vacuum, and feeding elements, preferably at least one nozzle, for feeding an impregnating agent (13) into the vacuum coating chamber (8) for depositing the impregnating agent (13) on the inner circumferential surfaces of the channels (5, 6) to generate a complete and axially continuous coating, **characterised in that** means are provided for the movement of the honeycomb composite support part (1) and the vacuum coating chamber (8) relative to each other.

15. Device according to Claim 14,
**characterised in**
**that** the vacuum coating chamber (8) has at least one, preferably slot- or gap-type opening for absorbing air, and/or in that blowing elements for blowing air are assigned to the vacuum coating chamber (8).

## Revendications

1. Procédé pour le revêtement d'une partie de support composite alvéolée (1) ayant une pluralité de canaux s'étendant dans une direction axiale avec un agent d'imprégnation pour augmenter la résistance au feu et/ou à l'eau et/ou la stabilité mécanique, dans lequel, l'agent d'imprégnation est alimenté dans une chambre de revêtement sous vide (8) et un revêtement entier et axialement continu est produit dans des canaux sur ses surfaces circonférentielles internes, déposant un agent d'imprégnation sur les surfaces circonférentielles internes des canaux, et l'agent d'imprégnation(13) en excès étant retiré de la chambre de revêtement sous vide (8),
**caractérisé en ce**
**que** la partie de support composite alvéolée (1) et la chambre de revêtement sous vide se déplacent l'une par rapport à l'autre.

2. Procédé selon la revendication 1,
**caractérisé en ce**
**que** de l'air est alimenté, notamment aspiré et/ou soufflé, dans la chambre de revêtement sous vide.

3. Procédé selon l'une des revendications 1 ou 2,
**caractérisé en ce**
**que** dans la chambre de revêtement sous vide (8) un courant d'agent d'imperméabilisation, notamment sous forme d'un mélange d'air/agent d'imprégnation, est généré par les canaux (5, 6).

4. Procédé selon l'une des revendications de 2 ou 3,
**caractérisé en ce**
**que** l'agent d'imprégnation (13) alimenté, particulièrement injecté dans la chambre de revêtement sous vide (8), de préférence par une buse, est tourbillonné, en particulier, atomisé de façon tourbillonnée, par l'air aspiré/soufflé dans la chambre de revêtement sous vide (8), et l'agent d'imprégnation (13) est déposé dans les canaux (5, 6).

5. Procédé selon l'une des revendications 2 à 4,
**caractérisé en ce**
**que** l'agent d'imprégnation (13) en excès est retiré avec l'air aspiré.

6. Procédé selon l'une des revendications 2 à 5,
**caractérisé en ce**
**que** l'air est aspiré dans la chambre de revêtement sous vide (8) par, au moins, un espace (12) entre la partie de support composite alvéolée (1) et la chambre de revêtement sous vide (8).

7. Procédé selon l'une quelconque des revendications précédentes, **caractérisé en ce**
**que** la partie de support composite alvéolée (1) et la chambre de revêtement sous vide (8) sont déplacées perpendiculairement à l'extension axiale des canaux (5, 6) l'une par rapport à l'autre.

8. Procédé selon l'une quelconque des revendications précédentes,
**caractérisé en ce**
**que** l'agent d'imprégnation (13) est constitué d'au moins une substance du groupe de substances suivant ou comprend au moins une de ces substances, de préférence avec un fluide, en particulier de l'eau : du ciment, en particulier, du micro-ciment, du verre, de la chaux, des liants inorganiques.

9. Procédé selon l'une quelconque des revendications précédentes,
**caractérisé en ce**
**qu'**au moins une couche supérieure, en particulier, en bois, carton, matière plastique expansée ou contreplaquée, est fixée à une face de la partie de support composite alvéolée (1) pour produire un élément de construction du type « sandwich ».

10. Partie de support composite alvéolée (1) revêtue conformément à un procédé, selon une des revendications précédentes où, de préférence, tous les canaux (5, 6) sont revêtus sur leur circonférence avec un revêtement d'imprégnation de ciment complet et axialement continu mélangé avec de l'eau.

11. Partie de support composite alvéolée selon la revendication 10,
**caractérisée en ce**
**que** la partie de support composite alvéolée (1) comprend, au moins, un papier de support (3) et au moins un papier ondulé (4) collé avec le papier de support (3) qui délimite avec sa première face ondulée orientée vers le papier de support des premiers canaux (5), ayant une première surface circonférentielle interne, et qui délimite, avec une seconde face ondulée orientée opposée à la première face, des seconds canaux (6) ayant une seconde surface circonférentielle interne, où les premières surfaces circonférentielles internes des premiers canaux (5), ainsi que les deuxièmes surfaces circonférentielles internes des seconds canaux (6) sont revêtues avec le revêtement d'imprégnation pour augmenter la résistance au feu ou à l'eau.

12. Partie de support composite alvéolée selon la revendication 11,
**caractérisée en ce**
**qu'**entre la première face du papier ondulé (4) et le papier de support (3), une couche de colle est fournie, où cette couche de colle, dans la zone de connexion entre le papier ondulé (4) et le papier de support (3), est directement adjacente au papier ondulé (4) et directement adjacente à la première face du papier de support (3), et en ce que une couche de colle est fournie entre la deuxième face du papier ondulé (4) et un, en particulier, le papier de support (3), où cette couche de colle, dans la zone de connexion entre le papier ondulé (4) et le papier de support (3), est directement adjacente au papier ondulé (4) et est directement adjacente à la deuxième face du papier de support (3).

13. Partie de support composite alvéolée selon la revendication 10,
**caractérisée en ce**
**que** la partie de support composite alvéolée (1) est formée comme un corps alvéolé expansé.

14. Dispositif de revêtement (7) formé pour exécuter un procédé selon l'une des revendications 1 à 9 pour revêtir une partie de support composite alvéolée (1) ayant une pluralité de canaux s'étendant dans une direction axiale avec un revêtement d'imprégnation pour augmenter la résistance au feu et/ou à l'eau et/ou la stabilité mécanique, où le dispositif (7) comprend une chambre de revêtement sous vide (8), associée à des moyens pour créer un vide ainsi que des moyens d'alimentation qui comprennent au moins une buse, pour alimenter un agent d'imprégnation (13) dans la chambre de revêtement sous vide (8) pour la déposition de l'agent d'imprégnation (13) sur les surfaces circonférentielles internes des canaux (5, 6), pour produire un revêtement axial complet et continu,
**caractérisé en ce**
**que** des moyens sont fournis pour déplacer la partie de support composite alvéolée (1) et la chambre de revêtement sous vide (8) l'une par rapport à l'autre.

15. Dispositif selon la revendication 14,
**caractérisé en ce**
**que** la chambre de revêtement sous vide (8) a, au moins, une ouverture, de préférence, sous forme de fente ou d'espace, pour l'aspiration de l'air et/ou en ce que des moyens d'insufflation sont prévus dans la chambre de revêtement sous vide (8).
